# EUROPEAN PATENT SPECIFICATION

(11) **EP 3 057 345 B1**
(45) Date of publication and mention of the grant of the patent: **31.03.2021**
(21) Application number: 16155433.2
(22) Date of filing: 12.02.2016
(51) Int. Cl.: H04S 7/00

(54) **MOBILE INTERFACE FOR LOUDSPEAKER OPTIMIZATION**
MOBILE SCHNITTSTELLE ZUR LAUTSPRECHEROPTIMIERUNG
INTERFACE MOBILE POUR OPTIMISATION DE HAUT-PARLEUR

(30) Priority: 16.02.2015 US 201562116837 P
(43) Date of publication of application: 17.08.2016
(73) Proprietor: Harman International Industries, Incorporated, Stamford, CT 06901 (US)
(72) Inventor: CHAVEZ, Paul Michael, Chatsworth, CA 91311 (US); HOLLADAY, Adam James Edward, Salt Lake City, UT 84106 (US); HESS, Sean, Los Angeles, CA 90013 (US); HAUSCHILD, Ryan Daniel, West Jordan, UT 84084 (US)
(74) Representative: Bertsch, Florian Oliver

(56) References cited:
- EP-A1- 2 975 861
- WO-A1-2014/032709
- US-A1- 2013 066 453
- Art Markman: "Motivation and the middle | Psychology Today", , 26 May 2011 (2011-05-26), XP055488823, Retrieved from the Internet: URL:https://www.psychologytoday.com/us/blo g/ulterior-motives/201105/motivation-and-t he-middle [retrieved on 2018-06-28]
- Neil Patel: "The Power of The Progress Bar as a Usability Feature", , 20 March 2013 (2013-03-20), XP055489062, Retrieved from the Internet: URL:https://neilpatel.com/blog/the-progres s-bar/ [retrieved on 2018-06-29]
- Genelec: "Operating Manual Genelec Loudspeaker Manager GLM(TM) 2.0 System Table of Contents", , 7 November 2014 (2014-11-07), XP055610697, Retrieved from the Internet: URL:https://www.genelec.com/sites/default/ files/media/Studio%20monitors/Software/GLM %202.0/glm_2.0_system_operating_manual_0.p df [retrieved on 2019-08-02]

## Description

### TECHNICAL FIELD

Embodiments disclosed herein generally relate to an interface for audio processing.

### BACKGROUND

Sound equalization refers to a technique by which amplitude of audio signals at particular frequencies is increased or attenuated. Sound engineers utilize equipment to perform sound equalization to correct for frequency response effects caused by speaker placement. This optimization may require expert understanding of acoustics, electro-acoustics and the particular hardware being used. Such equalization may require adjustments across multiple pieces of hardware. Testing the equalization within various environments may be cumbersome and tedious and often difficult for a non-engineer to perform.

### SUMMARY

The invention is defined by a system for providing an audio processing interface at a mobile device according to claim 1. The invention is furthermore defined by a corresponding method according to claim 5.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
Figure 1A illustrates an example a system diagram for a loudspeaker optimization system, in accordance to one embodiment;
Figures 1B and 1C illustrate example mobile devices, in accordance to one embodiment;
Figures 2A-S illustrate example screens facilitated by an equalization application at the user device; and
Figure 3 is an example process for the loudspeaker optimization system.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Disclosed herein is a mobile interface for sound system optimization using an audio test system that may be used to perform a large variety of audio tests. The interface system includes a mobile app graphic user interface (GUI) that may simplify the process of optimizing sound systems. The system may act as a front end interface for utilizing the automatic equalization (EQ) algorithms contained in the audio test system platform. The interface may reduce the number of steps to test an audio system, thereby enabling the interface simple for non-engineers to perform system optimization. This process can also include elements to make the process more compelling and entertaining for the end user.

Sound system optimization may be a complex process that may require an expert understanding of acoustics, electro-acoustics and the mastery of various hardware including equalizers, delays and gain adjustments. Often the adjustments may be made across multiple pieces of hardware.

Novice sound system users and musicians may not have the various technical skills required for such complex measurement and adjustment tasks and without system optimization a sound system can cause operational problems that can cause many problems for musicians such as feedback, spectral imbalance, etc.

Using clear graphic guidelines, a mobile interface allows users to move freely around a venue in which a public address (PA) system is used. This mobility allows for the user to move the measurement microphone around the venue, take a measurement and then move to another measurement location. With four to five moves, for example, a good room sample is taken and the audio test system auto EQ algorithm has enough information to calculate the room average spectral response of the system, estimate the correction curves, and to enter them into the sound system as needed.

There are many technical tools for optimizing sound systems that require expertise to operate the tool and expertise to know what the goals and steps are for achieving an optimized system - but there are few examples of simple automatic EQ systems for professional use. Implementations of auto EQ in the consumer market often do not incorporate averaging of multiple measurements. Additionally, such implementations may not encourage the user to perform a full set of measurements.

The simplified process may include the use of a mobile application and a diagonal set of measurement points across the venue leading to an average system spectral response measurement and a set of results that allow for automatic gain, delay and equalization settings.

A processor may provide all the processing needed between the mixer and amplifiers to optimize and protect your loudspeakers. With the mobile application, a user may control all aspects of the hardware through a network (e.g., WiFi) connection allowing the user to setup a system from any location.

The operations described and shown herein may be implemented on a controller within a mobile device remote from the rack/processor and in communication with at least one of the rack, amplifiers, speakers, subwoofers, mixer, etc., via a wireless or wired communication. The operations may also be implemented on a controller within the rack or other device within the sound system.

The AutoEQ process may use a frequency response curve and through iterative calculation, derive settings for some predetermined set of parametric filters to achieve a reasonable match to a predetermined target curve. Most sound systems may not have an ideal frequency response. These sound systems may need to be modified through the use of signal processing (typically parametric filters) in order to achieve an optimized result. The optimized frequency response target is known as the "target curve".).

The GUI will allow a novice user to easily achieve a better sounding audio system. This GUI/workflow could be implemented on hardware (e.g. iPad, iPhone, laptop computer with display, etc.). The GUI/computer could control a plurality of digital signal processing hardware, such as a rack, or some other digital signal processing device. One advantage of the GUI/workflow is that it assists the user in performing multiple acoustical measurements in a variety of positions within a room to enable the calculation of an average room response. The average room response is an averaging of multiple room measurements. No single measurement can be used because there are always spatial anomalies in any one location. Such anomalies are averaged out by taking multiple measurements and averaging them together. The GUI guides the user through this multiple measurements process. The GUI then confirms the quality of the measurements to the end user. The controller, via the application, calculates the average and then determines what filters are needed to make that average match the target curve. The target curve is determined in advance. The results are sent to hardware capable of implementing the needed filters to achieve the modified system response.

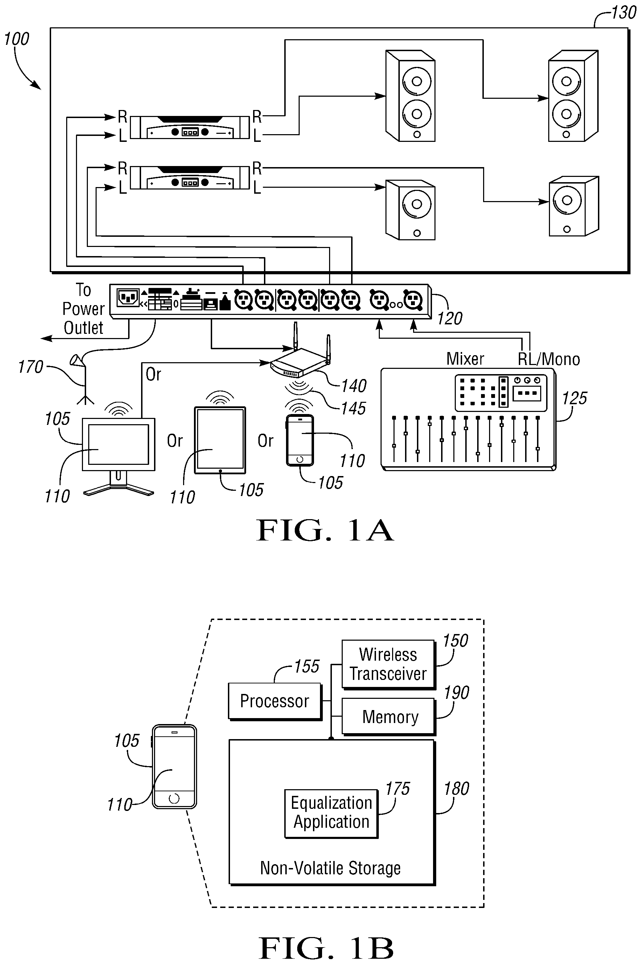

Figure 1A illustrates a system diagram for a loudspeaker optimization system 100. The system 100 may include various mobile devices 105, each having an interface 110. The mobile devices 105 may include any number of portable computing devices, such as cellular phones, tablet computers, smart watches, laptop computers, portable music players, or other devices capable of communication with remote systems as a processor 120. In an example, the mobile device 105 may include a wireless transceiver 150 (as shown in Figure 1B) (e.g., a BLUETOOTH module, a ZIGBEE transceiver, a Wi-Fi transceiver, an IrDA transceiver, an RFID transceiver, etc.) configured to communicate with a wireless router 140. Additionally or alternately, the mobile device 105 may communicate with any of the other devices, as shown, over a wired connection, such as via a USB connection between the mobile device 105 and the other device. The mobile device 105 may also include a global positioning system (GPS) module (not shown) configured to provide current location and time information to the mobile device 105.

The interface 110 of the mobile device 105 may be configured to display information to a user and to receive commands from the user. The interfaces 110 may be any one of, or a combination of visual displays such as light emitting diodes (LEDs), organic LED (OLED), Active-Matrix Organic Light-Emitting Diode (AMOLED), liquid crystal displays (LCDs), thin film diode (TFD), cathode ray tube (CRT), plasma, a capacitive or resistive touchscreen, etc.

The system 100 may also include an audio mixer 125, and various outputs 130. The outputs 130 may include loudspeakers (also referred to as speakers) 130, amplifiers, subwoofers, etc. The processor 120 may be in communication with the mixer 125 and the outputs 130 and provide for various audio processing therebetween. The processor 120 may be configured to optimize audio signals to protect the outputs 130. The processor 120 may be a HARMAN DriveRack processor, including but not limited to the DriveRack VENU360, DriveRack PA2, DriveRack PA2 Premium. The processor 120 may optimize the audio signals by acquiring a test sample (e.g., via microphone 170), such as white noise, pink noise, a frequency sweep, a continuous noise signal, or some other audio signal.

The processor 120 may include various audio processing controls and features including AutoEQ™ and AFS™. AutoEQ™ may provide for automatic equalization of the outputs 130 for a specific environment. The processor 120 may also balance left/right speaker levels, low/mid/high speaker levels. AFS™ may detect initial frequencies which cause feedback and notch the frequencies with fixed filters. AFS™ may also automatically enable Live filters for protection during use.

The processor 120 may be connected with the various system components via wired or wireless connections. As shown by way of example in Figure 1A, the mixer 125 and outputs 130 may be connected to the processor 120 via wired connections. A wireless router 140 may be included to facilitate wireless communication between the components. In practice, the mobile devices 105 may communicate with the processor 120 via a wireless network 145 (e.g., BLUETOOTH, ZIGBEE, Wi-Fi, etc.). This may allow for remote access to the processor 120. Alternately the wireless router may be built into the processor 120. The processor 120 can be a stand-alone component or it may also be built into another component such as the amplifier/speaker output 130 or the mixer 125.

The mobile devices 105 may facilitate control of various processor functions via an equalization application 175 (as shown in Figure 1B) at the mobile device 105. The equalization application 175 may be downloadable to the mobile device 105 and may be used to control and interface with the processor 120. The equalization application 175 may provide the interface 110 of the mobile device 105 with a graphical user interface (GUI) in order to present information to the user, as well as receive commands from the user. For example, the user may select an AutoEQ™ button on the GUI or interface 110 to run the AutoEQ™ feature at the processor 120. The interface 110 is described in more detail below. One feature of the equalization application 175 is known as the Wizard feature. This feature permits and facilitates signal processing in an effort to produce the best sound quality possible in the given environment. The Wizard feature is discussed in detail herein with respect to the specific processing features that the Wizard feature includes, such as AutoEQ™, AFS™, etc.

The Wizard feature may sample, or test, the environment surrounding the loudspeakers or outputs 130. The environment may be sampled using a microphone 170. The microphone 170 may be a stand-alone device. Additionally or alternatively, the microphone 170 may be integrated within the processor 120 and/or the mobile device 105. The microphone 170 may be an omni-directional, flat frequency measurement microphone designed to pick up all frequencies from 20 Hz to 20 kHz. The microphone 170 may be configured to sample the surrounding environment by acquiring real-time environment audio signals. In one example, the microphone 170 may be an RTA-M™ microphone.

The microphone 170 may be portable. That is, the microphone 170 may be movable throughout the environment in order to collect environment audio signals at various locations in the environment. During sampling, audio sounds may be emitted from the loudspeakers 130. The audio sounds may be randomly generated, or may be pre-determined sounds dictated by the processor 120 to facilitate a controlled sample set of sounds. In addition to the sounds emitted from the loudspeakers, the microphone 170 may also receive ambient noise and other environment noises.

The microphone 170 may transmit the sampled sounds (also referred to herein as samples) to the processor 120. Additionally or alternatively, the sampled sounds may be transmitted to the mobile device 105. Although the methods and operations herein are described as being achieved via the processor 120, the operations may also be performed by the mobile device 105, another separate server (not shown), the mixer 125, etc.

Figure 1B illustrates an example mobile device 105 having a processor 155 including a controller and may be configured to perform instructions, commands and other routines in support of the operations described herein. Such instructions and other data may be maintained in a nonvolatile manner using a variety of types of computer-readable storage medium 180. The computer-readable medium 180 (also referred to as a processor-readable medium or storage) includes any non-transitory medium (e.g., a tangible medium) that participates in providing instructions or other data to a memory 190 that may be read by the processor 155 of the mobile device 105. Computer-executable instructions may be compiled or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

As mentioned, the mobile device 105 may include a wireless transceiver 150 (e.g., a BLUETOOTH module, a ZIGBEE transceiver, a Wi-Fi transceiver, an IrDA transceiver, an RFID transceiver, etc.) configured to communicate with the wireless router 140.

The mobile device 105 may include the equalization application 175 stored on the storage 180 of the mobile device 105. The equalization application 175 may interface with the processor 120 to display various screens via the interface 110. These screens may facilitate optimization of the audio equalization. While the operations described herein are described as being performed by the processor 120, the operations may also be performed by the mobile device 105. That is, the mobile device 105 may include the automatic equalization algorithms contained in the processor 120 such as the HATS (Harman Audio Test System) platform.

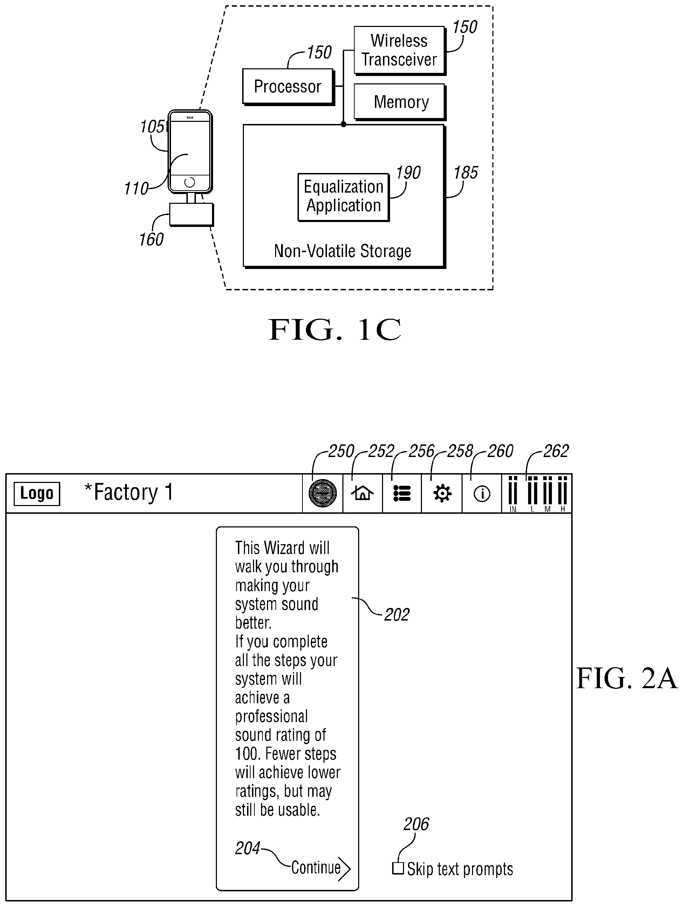

Figure 1C illustrates another example mobile device 105 having a pluggable modular device 160 configured to be connected to the mobile device 105 (e.g., into a universal serial bus (USB) or other port). The modular device 160 may include a microphone configured to sample sounds and transmit the sampled sounds to the processor 120, similar to microphone 170 described herein. Additionally or alternatively, the mobile device 105 may include an integrated microphone configured to collect sounds samples and may transmit the sampled sounds to the processor 120 via the wireless network 145.

Referring to Figures 2A-2S, exemplary screen shots of the GUI presented via the interface 110 for performing the AutoEQ™ feature are shown. As explained, commands and information may be exchanged between the mobile device 105 and the processor 120 via the wireless network 145. At start-up of the equalization application 175 at the mobile device 105, the equalization application 175 may initiate a search for a processor 120. Via the wireless network, the equalization application 175 may instruct the mobile device 105 to send requests. The requests may be received at the processor 120 which may in turn respond with processor 120 information such as a processor ID, IP address, etc. Upon 'pairing' of the processor 120 and the mobile device 105, an interface may be created, allowing commands, responses and information to be transmitted and received between the devices.

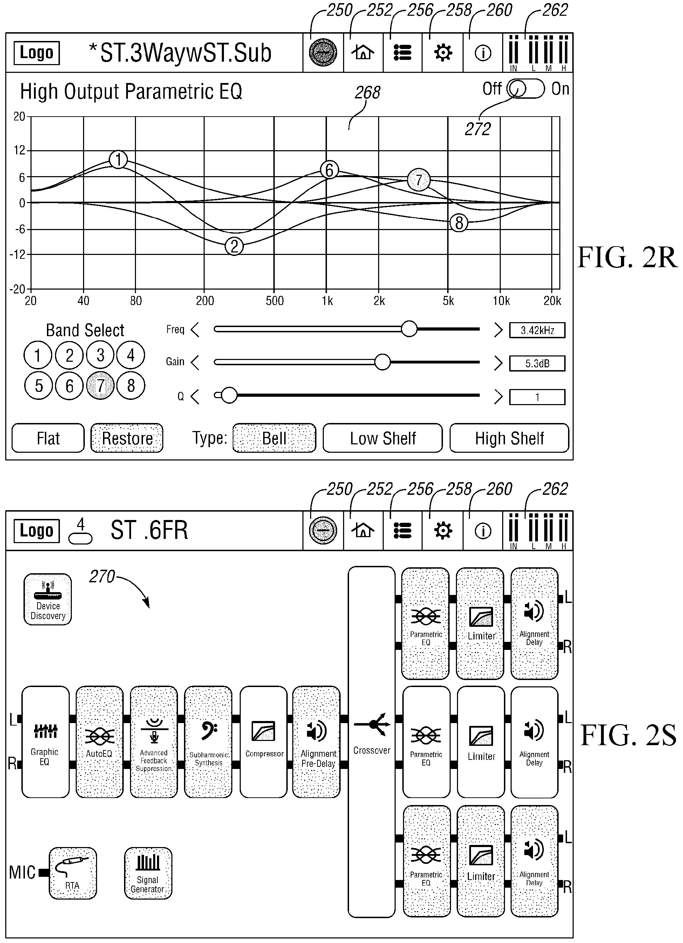

As shown in Figures 2A-2S, an example screen may include a shortcut selectable options such as a Wizard button 250, a home button 252, a menu button 256, a settings button 258 and an information button 260. The Wizard button 250, upon selection, may initiate the Wizard feature discussed herein with respect to Figures 2A-2Q. The home button 252, upon selection, may display a screen similar to that of Figure 2S and discussed below. The menu button 256 may present a list of quick links and available options to the user. The settings button 258 may be selected to apply various user settings, pre-set system settings, etc. The information button 260 may provide general information and help information. A status bar 262 may also be presented to provide the user of indications of the status of each of various amplifiers (e.g., high amplifier, middle amplifier, and low amplifier).

Referring to Figure 2A, the processor 120 may present an introductory screen having a text box 202 with an introductory message via the interface 110. The introductory message may inform the user with information about a feature (e.g., the Wizard feature). The introductory screen may also include a selectable continue option 204 and a selectable skip text prompts option 206.

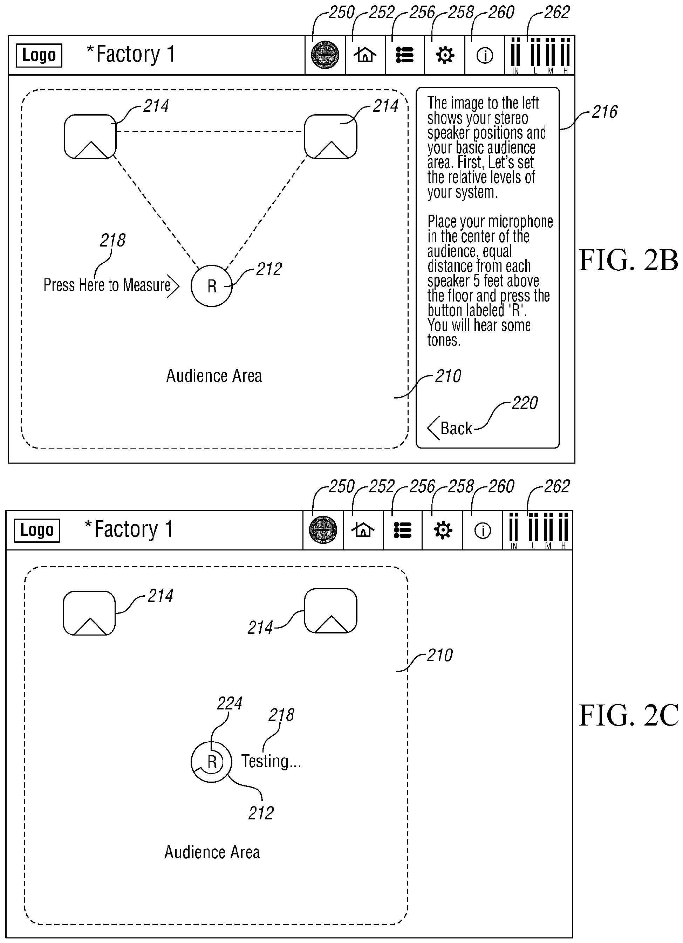

Figure 2B may present an audience area 210 showing a microphone icon 212 and at least one speaker icon 214. This screen may facilitate room set-up for optimization of the Wizard function. That is, the screen may provide set-up instructions to the user with respect to the system speakers 130 and microphone 170 in order to gather sufficient audio samples to best configure the audio settings. The screen may include a text box 216 with information regarding the Wizard feature set up. For example, the text block may instruct the user to place a microphone at a specific, or ideal location with respect to the speakers. Additionally or alternatively, further instructions 218 may be presented within the audience area such as "press here to measure." The screen may also present a selectable back option 220.

Figure 2C may present a screen similar to Figure 2B, but Figure 2C may indicate that testing is currently in progress. The audience area 210 may include the microphone icon 212 and the speaker icon 214, but may also include a testing status icon 224 at the microphone icon 212 to indicate that testing is currently in progress. The testing icon 224 may continually update to show the amount of testing as testing is completed. That is, as testing progresses, so will the testing icon 224 to indicate the progression.

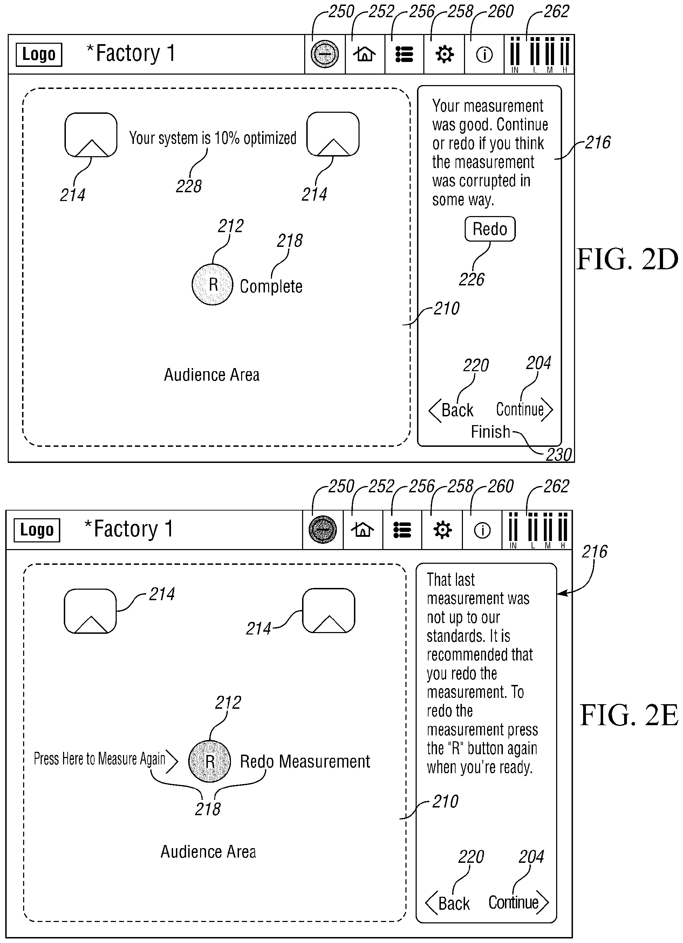

If the equalization application determines that testing resulting in a good sample, then a screen similar to Figure 2D may be presented via the interface 110. If the testing sample was not considered a good sample, then a screen similar to Figure 2E may be presented. In one example, the quality of a signal may be determined based on signal-to-noise ratio (SNR). In this example, a SNR greater than a predefined ratio may render the testing sample acceptable. Other mechanisms may be used to evaluate the signal quality such as coherence, look-up-tables (e.g., is the signal similar to what would be expected based on other like-circumstances), etc. During initial samplings, similar to that during the screens shown in Figures 2B and 2C, various samples may be taken with various output levels at the loudspeakers 130. The loudspeakers 130 may be instructed to gradually increase their output levels until a desirable output level is achieved (e.g., until a desirable SNR is reached). The equalization application may then proceed to provide instructions with respect to sampling for equalization purposes.

In the screen in Figure 2D, the text box 216 may indicate that the measurement taken during testing is a good measurement (e.g., a successful sample). A selectable redo option 226 may be presented to re-run the testing. The microphone icon 212 may indicate that testing in complete by returning to a normal state from the testing state shown in Figure 2C via the testing status icon 224. Textual instructions 228 may also provide information regarding the testing outcome such as "complete" and "your system is 10% optimized." Selectable options such as the back option 220, continue option 204 and a finish option 230, may also be presented.

A screen similar to Figure 2E may be presented in response to retrieving a poor testing sample. The audience area 210 may include further instructions 218 such as "press here to measure again." Additionally or alternatively, the text box 216 may include information and/or instructions relating to the failed test. Without high-quality testing samples, the processor 120 may have difficulty accurately and efficiently configuring the audio settings for the environment. The microphone icon 212 may change appearances (e.g., may change colors) depending on the testing status. The status information or further instructions 218 may also include textual phrasing such as "Redo Measurement."

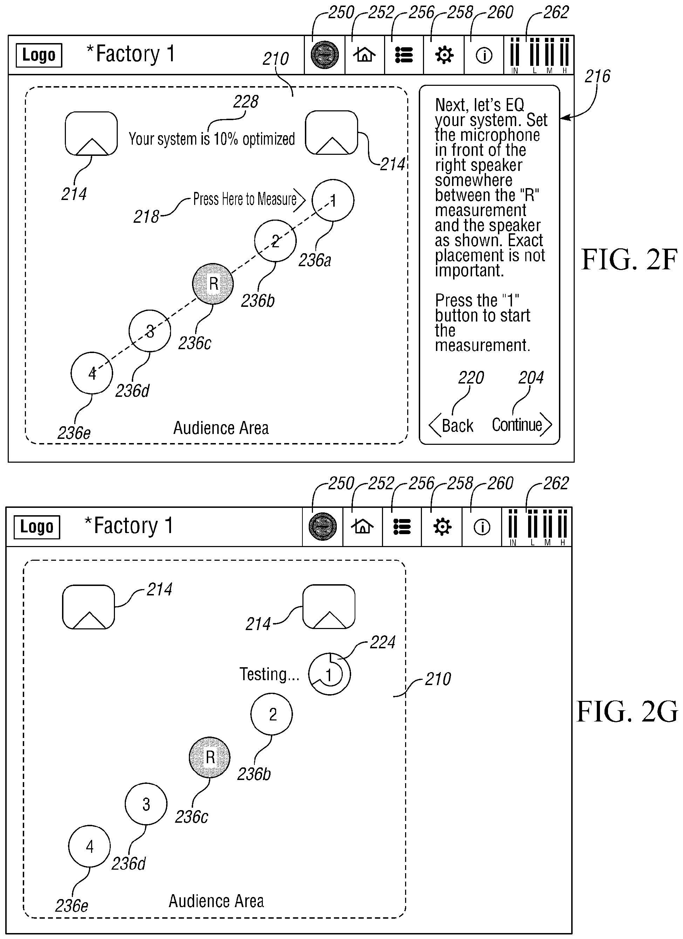

Once sufficient testing samples have been acquired, the equalization application 175 may present a screen similar to Figure 2F via the interface 110. Figure 2F illustrates cascading microphone location icons 236A-236E (referred to collectively as location icons 236). At each location icon 236, the user may be instructed to select the icon. In the example shown, the screen may instruct the user to press the first location icon 236A. Once the icon is selected, testing may commence. During testing, similar to the screen in Figure 2C, the testing status icon 224 may appear over the selected icon, as shown in Figure 2G. The various microphone location icons 236 may correspond to a location relative to the loudspeakers 130 within the environment, giving the user a visual indication of where to place the microphone 170 for sampling purposes.

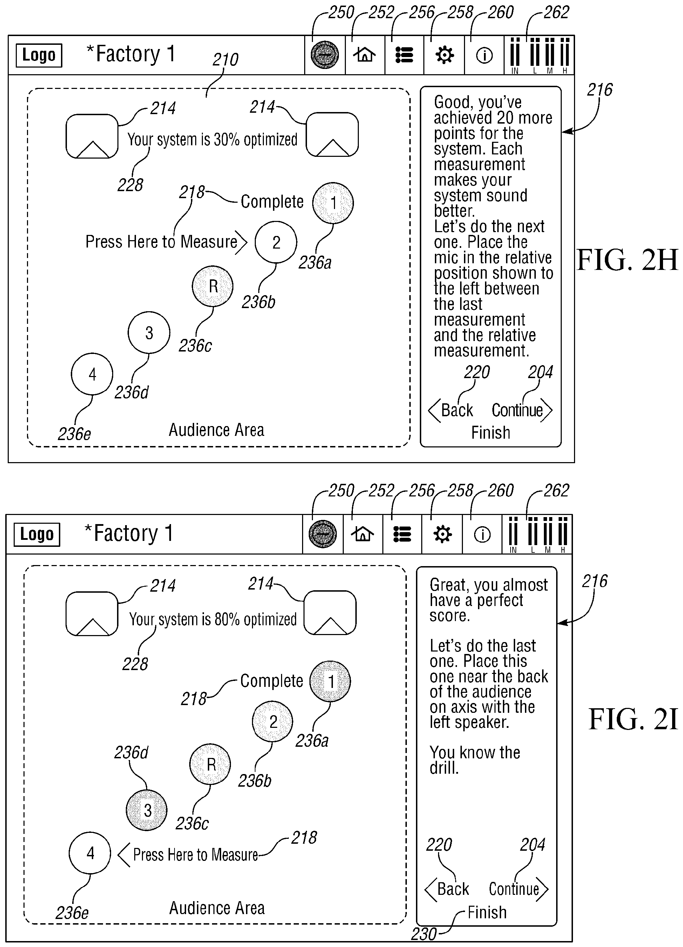

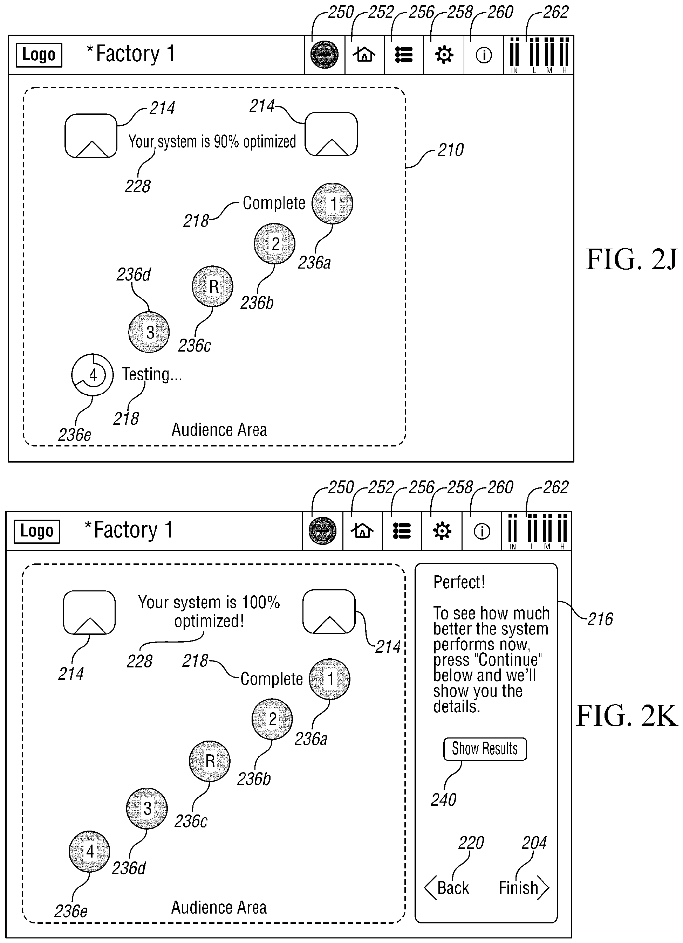

Referring to Figure 2H, once testing has finished at one of the microphone locations (e.g., location associated with microphone location icon 236a), the microphone location icon 236a may indicate that testing in complete by returning to a normal state from the testing state shown in Figure 2G via the testing status icon 224. The textual instructions 228 may also be updated to show the testing status in terms of percentage optimized. The further instructions 218 may indicate the next location icon 236b to be selected for testing. Other example screens are shown in Figure 2I and 2J. Thus, as testing proceeds, the icons within the audience area 210 proceed to be updated in order to inform the user of each of their statuses. This type of updating aids in guiding the user through the optimization process, and may result in an overall better user experience both during testing as well as afterwards at least because the resultant audio quality.

Figure 2K illustrates a resulting screen after all testing has been finished. The textual instructions 228 may indicate that the system is fully optimized. The text box 216 may include further instructions and a selectable results option 240.

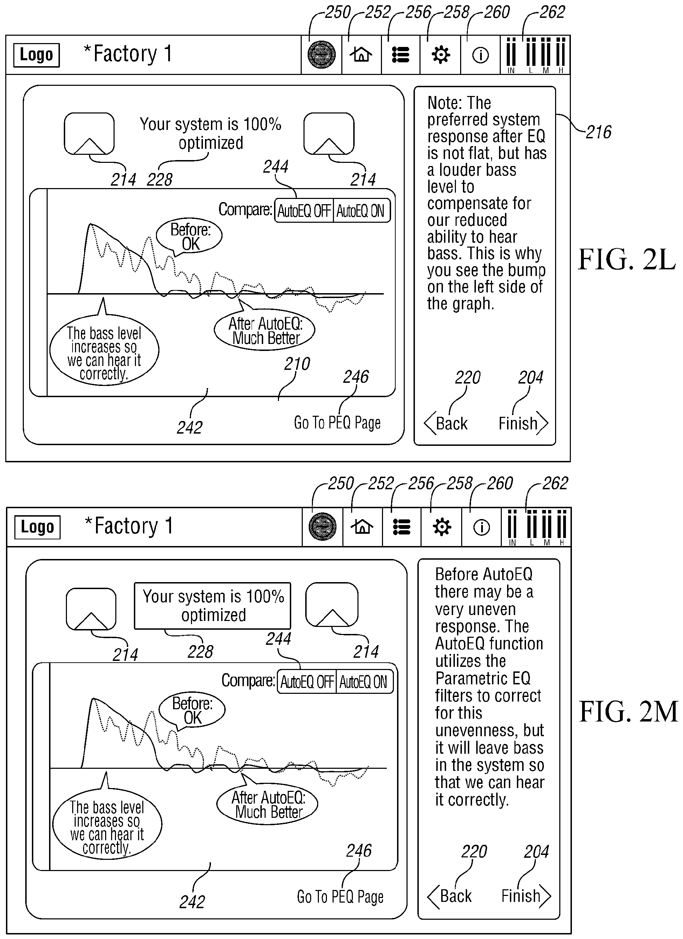

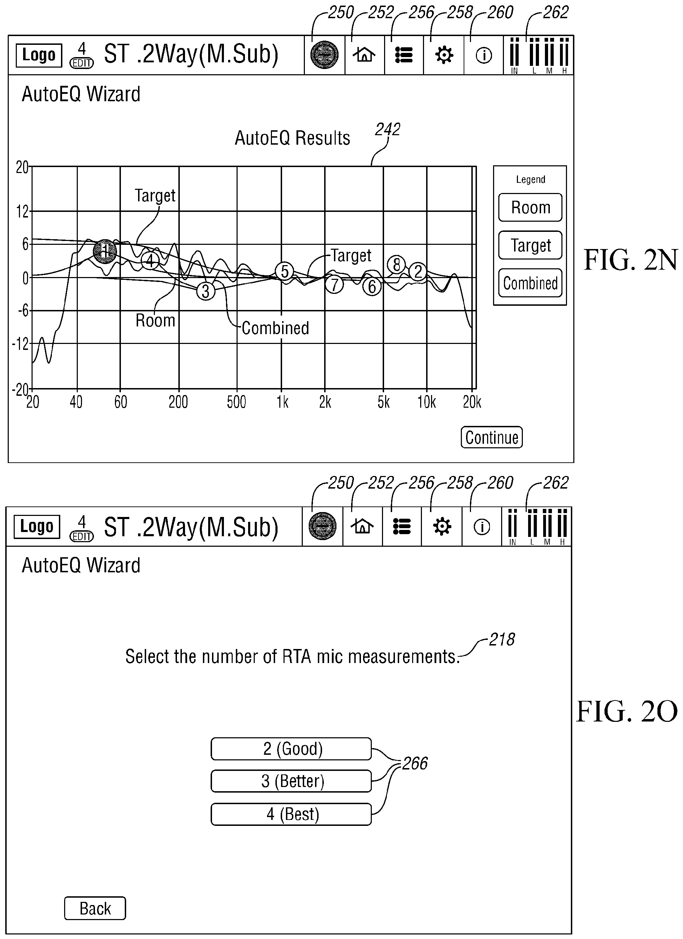

Figures 2L and 2M illustrate screens upon selection of the results option 240. The screen may include a graphical representation 242 of the audio quality before and after optimization. The screen may present AutoEQ on/off selectable options 244. Upon selecting one of the options 244, the corresponding curve may become highlighted. For example, Figure 2L may result when the 'AutoEQ ON' option is selected, where the smooth post-AutoEQ processing curve is highlighted. Figure 2M may result when the 'AutoEQ OFF" option is selected, where the normal curve is highlighted. Figures 2L and 2M may also present a parametric equalization (PEQ) option 246. The PEQ options may present specific PEQ settings and parameters. Modifications may be made via the interface 110. An exemplary screen for the PEQ option is shown in Figure 2N.

Figure 2N illustrates another example screen for displaying the graphical representation 242 of the AutoEQ feature. The graphical representation 242 may show frequency response of a target system response, the results of the system/room measurements, the individual parametric filters and a combined or resultant system response with the AutoEQ filters applied to the room measurement. The target response curve may be the desired frequency response to produce the best audio reproduction. The room measurement results may be the average frequency response of all of the individual system/room measurements. The individual parametric filters may be the parametric filter values derived from the AutoEQ calculations. The combined system response may be the room response results after the parametric filters are applied to the outputs to produce a curve showing the resultant system frequency response.

Figures 2O-2Q illustrate additional example screens for performing optimizations using the Wizard feature. Figure 2O illustrates an example screen allowing the user to select the number of microphone measurements to be taken during optimization. By selecting one of the measurement options 266, the microphone 170 may automatically acquire the selected amount of sound samples during testing for each test (e.g., at each microphone location represented by the respective icon 236). The more samples acquired during optimization, the more accurate the depiction of the ambient room audio will be.

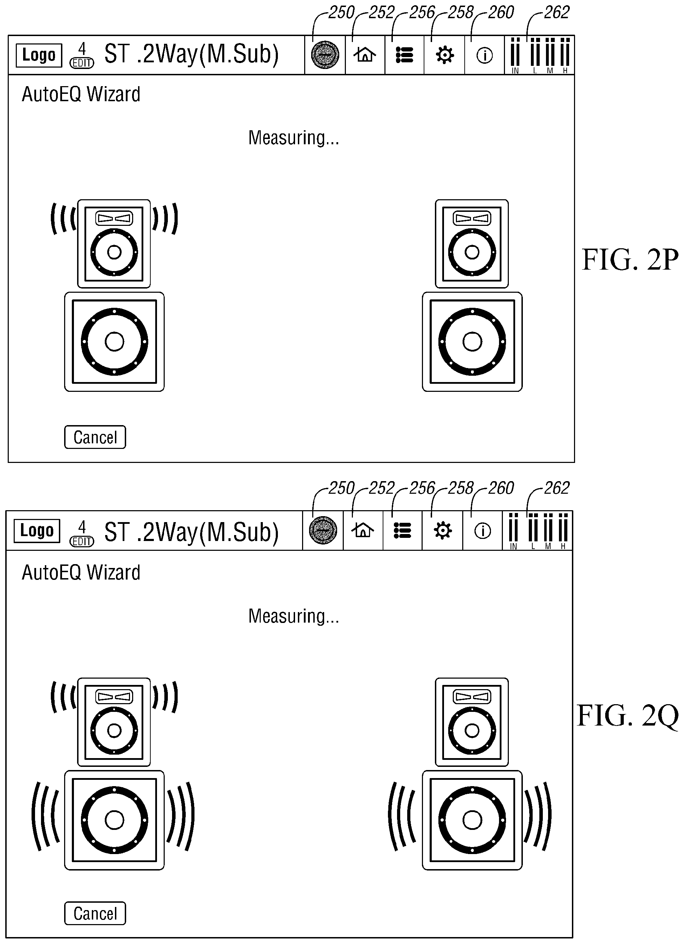

Figures 2P and 2Q illustrates additional screens showing which speakers may be currently tested. In addition to, or in the alternative to, a dynamic testing status icon 224 indicating the status of a test, specific screens such as those shown in 2P and 2Q may illustrate the status of certain samplings. For example, the speakers may iteratively change (e.g., light up) on the screens, showing the progression of testing. As shown in Figure 2P, a first speaker may be illuminated at testing initiation. As testing progresses, more speakers may be illuminated, as shown in Figure 2Q. In addition to visually showing the progression of the sampling, the processor 120 may also perform balancing between the subwoofers and the top cabinets via a level set feature.

Figure 2R illustrates an example PEQ option screen showing a graphical representation 268 of the frequency response of the PEQ. THE PEQ option screen also provides for various adjustments of selected bands, as well as an on/off selectable option 272.

Figure 2S illustrates an example home screen showing a set of features 270 available to the user via the equalization application. This home screen may provide for selection of the features and provide for a user-friendly interface with the various features. For example, selecting the "device discovery" selectable feature may initiate a search for a processor 120. Selecting the AutoEQ selectable feature may initiate the AutoEQ feature, as described above. Thus, user, even non-technical users, may easily navigate through the various features available via the equalization application 175.

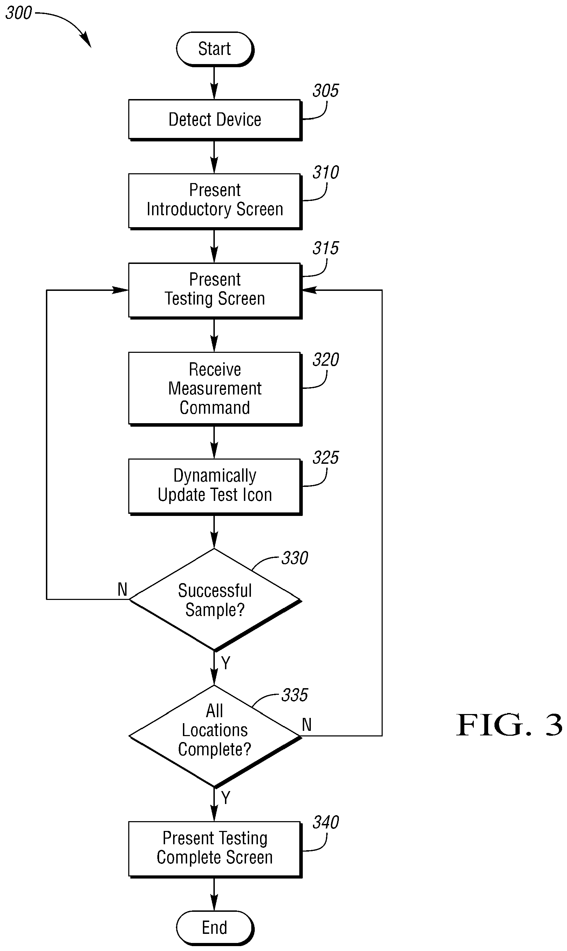

Figure 3 is an example process 300 for the loudspeaker optimization system. The process 300 begins at block 305 where the processor 155 of the mobile device 105 may detect the processor 120. The controller within the processor 155 may be configured to perform instructions, commands, and other routines in support of the iterative process for the loudspeaker optimization system.

At block 310, the controller may present an introductory screen via the interface 110. The introductory screen may be similar to the screen illustrated in Figure 2A.

At block 315, the controller may present a testing screen similar to the screen illustrated in Figure 2B, for example.

At block 320, the controller may receive a measurement command indicating a selection of the speaker icon 214.

At block 325, the controller may dynamically update the speaker icon 214 to indicate the current testing status thereof. For example, a scrolling icon similar to the one shown at testing icon 224 of Figure 2C may be updated. In another example, upon testing complete, a test complete icon, similar to the microphone icon 212 of Figure 2D may be updated. Other examples may be seen in Figures 2F-2J. Further, the textual instructions 228 may also be updated regarding the testing outcome/status such as "complete" and "your system is 10% optimized."

At block 330, the controller may determine whether the sample taken during testing was a good measurement (e.g., a successful sample). A screen similar to Figure 2E may be presented in response to receiving a poor sample and the process 300 may proceed to block 315. If the sample is successful, the process 300 may proceed to block 335.

At block 335, the controller may determine whether each of the locations 236 have been successfully tested, or if successful samples have been acquired at each location 236. If each location has been successfully sampled, the process 300 proceeds to block 340. If not, the process 300 returns to block 315.

At block 340, the controller may present a testing complete screen similar to the screens illustrated in Figures 2K-2N. The process may then end.

Accordingly, an equalization system may include an equalization application configured to display instructions and information to a user during optimization of the system. By encouraging a user to perform simple but specific tasks using the equalization application via their mobile device, optimization may be increased, facilitating a better, higher quality audio sound.

Computing devices, such as the processor, mixer, remote device, external server, etc., generally include computer-executable instructions, where the instructions may be executable by one or more computing devices such as those listed above. Computer-executable instructions may be compiled or interpreted from computer programs created using a variety of programming languages and/or technologies, including, without limitation, and either alone or in combination, Java™, C, C++, Visual Basic, Java Script, Perl, etc. In general, a processor (*e.g.,* a microprocessor) receives instructions, *e.g.,* from a memory, a computer-readable medium, etc., and executes these instructions, thereby performing one or more processes, including one or more of the processes described herein. Such instructions and other data may be stored and transmitted using a variety of computer-readable media.

While exemplary embodiments are described above, it is not intended that these embodiments describe all possible forms of the invention. Rather, the words used in the specification are words of description rather than limitation, and it is understood that various changes may be made without departing from the scope of the invention as defined in the appended claims. Additionally, the features of various implementing embodiments may be combined to form further embodiments of the invention.

## Claims

1. A system for providing an audio processing interface at a mobile device, comprising:
a mobile device (105) including an interface configured to:
detect an audio processor (120);
present, via a user interface, a display screen to receive user input to initiate audio testing;
iteratively present a series of testing screens, each including at least one instruction and a diagonal set of microphone locations and test status associated with each of the microphone locations; and
present another instruction and test status associated with another one of the set of microphone locations in response to receiving an indication of a successful sample at a previous microphone location, the successful sample having a signal to noise ratio above a predefined ratio, and
update each of the testing screens to indicate testing is complete at the respective microphone location in response to receiving an indication of a successful sample at that respective microphone location;
a microphone configured to collect audio signals at each of the microphone locations,
the processor configured to receive the collected audio signals from the microphone and to calculate an average room response of location in which the system is located.

2. The system of claim 1, the mobile device (105) further configured to present a testing status icon during testing at the one of the microphone locations.

3. The system of any of claims 1 to 2, the mobile device further configured to provide a selectable option on at least one of the testing screens to acquire at least one audio sample to be analyzed and processed to increase audio sound quality of a loudspeaker.

4. The system of any of claims 1 to 3, wherein the display screen includes at least one selectable auto equalization feature.

5. A method, comprising:
detecting an audio processor (120);
presenting, via a user interface, a display screen to receive user input to initiate audio testing;
iteratively presenting a series of testing screens, each including at least one instruction and a diagonal set of microphone locations and test status associated with each of the microphone locations; and
presenting another instruction and test status associated with another one of the set of microphone locations in response to receiving an indication of a successful sample at a previous microphone location, the successful sample having a signal to noise ratio above a predefined ratio; and
updating each of the testing screens to indicate testing is complete at the respective microphone location in response to receiving an indication of a successful sample at that respective microphone location; and
collecting with a microphone audio signals at each of the microphone locations;
receiving the collected audio signals from the microphone and calculating an average roam response of a location in which the equalization system is located.

## Patentansprüche

1. System zum Bereitstellen einer Audioverarbeitungsschnittstelle an einer mobilen Vorrichtung, umfassend:
eine mobile Vorrichtung (105), die eine Schnittstelle beinhaltet, die zu Folgendem konfiguriert ist:
Detektieren eines Audioprozessors (120);
Darstellen eines Anzeigebildschirms über eine Benutzerschnittstelle, um eine Benutzereingabe zu empfangen, um Audioprüfung einzuleiten;
iteratives Darstellen einer Reihe von Prüfbildschirmen, die jeweils mindestens eine Anweisung und einen diagonalen Satz von Mikrofonstandorten und Prüfstatus, die jedem der Mikrofonstandorte zugeordnet sind, beinhalten; und
Darstellen einer anderen Anweisung und eines anderen Prüfstatus, der einem anderen des Satzes von Mikrofonstandorten zugeordnet ist, als Reaktion darauf, dass eine Angabe einer erfolgreichen Abtastung an einem vorherigen Mikrofonstandort empfangen wird, wobei die erfolgreiche Abtastung ein Signal-Rausch-Verhältnis über einem vordefinierten Verhältnis aufweist, und
Aktualisieren jedes der Prüfbildschirme, um anzugeben, dass die Prüfung an dem jeweiligen Mikrofonstandort abgeschlossen ist, als Reaktion darauf, dass eine Angabe einer erfolgreichen Abtastung an jenem jeweiligen Mikrofonstandort empfangen wird; ein Mikrofon, das dazu konfiguriert ist, Audiosignale an jedem der Mikrofonstandorte zu erfassen,
wobei der Prozessor dazu konfiguriert ist, die erfassten Audiosignale von dem Mikrofon zu empfangen und eine durchschnittliche Raumantwort des Standorts, an dem sich das System befindet, zu berechnen.

2. System nach Anspruch 1, wobei die mobile Vorrichtung (105) ferner dazu konfiguriert ist, während der Prüfung an dem einen der Mikrofonstandorte ein Prüfstatussymbol darzustellen.

3. System nach einem der Ansprüche 1 bis 2, wobei die mobile Vorrichtung ferner dazu konfiguriert ist, eine auswählbare Option auf mindestens einem der Prüfbildschirme bereitzustellen, um mindestens eine Audioabtastung zu erlangen, die analysiert und verarbeitet werden soll, um die Audioschallqualität eines Lautsprechers zu erhöhen.

4. System nach einem der Ansprüche 1 bis 3, wobei der Anzeigebildschirm mindestens ein auswählbares Merkmal zur automatischen Entzerrung beinhaltet.

5. Verfahren, umfassend:
Detektieren eines Audioprozessors (120);
Darstellen eines Anzeigebildschirms über eine Benutzerschnittstelle, um eine Benutzereingabe zu empfangen, um Audioprüfung einzuleiten;
iteratives Darstellen einer Reihe von Prüfbildschirmen, die jeweils mindestens eine Anweisung und einen diagonalen Satz von Mikrofonstandorten und Prüfstatus, die jedem der Mikrofonstandorte zugeordnet sind, beinhalten; und
Darstellen einer anderen Anweisung und eines anderen Prüfstatus, der einem anderen des Satzes von Mikrofonstandorten zugeordnet ist, als Reaktion darauf, dass eine Angabe einer erfolgreichen Abtastung an einem vorherigen Mikrofonstandort empfangen wird, wobei die erfolgreiche Abtastung ein Signal-Rausch-Verhältnis über einem vordefinierten Verhältnis aufweist; und
Aktualisieren jedes der Prüfbildschirme, um anzugeben, dass die Prüfung an dem jeweiligen Mikrofonstandort abgeschlossen ist, als Reaktion darauf, dass eine Angabe einer erfolgreichen Abtastung an jenem jeweiligen Mikrofonstandort empfangen wird; und
Erfassen von Audiosignalen an jedem der Mikrofonstandorte mit einem Mikrofon;
Empfangen der erfassten Audiosignale von dem Mikrofon und Berechnen einer durchschnittlichen Raumantwort eines Standorts, an dem sich das Entzerrungssystem befindet.

## Revendications

1. Système pour fournir une interface de traitement audio sur un dispositif mobile, comprenant :
un dispositif mobile (105) comportant une interface configurée pour :
détecter un processeur audio (120) ;
présenter, via une interface utilisateur, un écran d'affichage pour recevoir une entrée utilisateur afin de lancer un test audio ;
présenter de manière itérative une série d'écrans de test, comportant chacun au moins une instruction et un ensemble diagonal d'emplacements de microphone et un état de test associé à chacun des emplacements de microphone ; et
présenter une autre instruction et un autre état de test associé à un autre de l'ensemble d'emplacements de microphone en réponse à la réception d'une indication d'un échantillon réussi à un emplacement de microphone précédent, l'échantillon réussi ayant un rapport signal sur bruit supérieur à un rapport prédéfini, et
mettre à jour chacun des écrans de test pour indiquer que le test est terminé à l'emplacement de microphone respectif en réponse à la réception d'une indication d'un échantillon réussi à cet emplacement de microphone respectif ;
un microphone configuré pour collecter des signaux audio à chacun des emplacements de microphone,
le processeur étant configuré pour recevoir les signaux audio collectés depuis le microphone et pour calculer une réponse spatiale moyenne de l'emplacement dans lequel le système est situé.

2. Système selon la revendication 1, le dispositif mobile (105) étant en outre configuré pour présenter une icône d'état de test pendant le test à l'un des emplacements de microphone.

3. Système selon l'une quelconque des revendications 1 à 2, le dispositif mobile étant en outre configuré pour fournir une option sélectionnable sur au moins l'un des écrans de test afin d'acquérir au moins un échantillon audio à analyser et traiter pour augmenter la qualité de son audio d'un haut-parleur.

4. Système selon l'une quelconque des revendications 1 à 3, dans lequel l'écran d'affichage comporte au moins une caractéristique d'égalisation automatique sélectionnable.

5. Procédé, comprenant :
la détection d'un processeur audio (120) ;
la présentation, via une interface utilisateur, d'un écran d'affichage pour recevoir une entrée utilisateur afin de lancer un test audio ;
la présentation de manière itérative d'une série d'écrans de test, comportant chacun au moins une instruction et un ensemble diagonal d'emplacements de microphone et un état de test associé à chacun des emplacements de microphone ; et
la présentation d'une autre instruction et d'un autre état de test associé à un autre de l'ensemble d'emplacements de microphone en réponse à la réception d'une indication d'un échantillon réussi à un emplacement de microphone précédent, l'échantillon réussi ayant un rapport signal sur bruit supérieur à un rapport prédéfini ; et
la mise à jour de chacun des écrans de test pour indiquer que le test est terminé à l'emplacement de microphone respectif en réponse à la réception d'une indication d'un échantillon réussi à cet emplacement de microphone respectif ; et
la collecte avec un microphone de signaux audio à chacun des emplacements de microphone ;
la réception des signaux audio collectés depuis le microphone et le calcul d'une réponse d'itinérance moyenne d'un emplacement dans lequel le système d'égalisation est situé.
